(19) Europäisches Patentamt
European Patent Office
Office européen des brevets

(11) **EP 3 109 399 B1**

(12) **EUROPÄISCHE PATENTSCHRIFT**

(45) Veröffentlichungstag und Bekanntmachung des Hinweises auf die Patenterteilung:
**09.08.2017   Patentblatt 2017/32**

(21) Anmeldenummer: **15173424.1**

(22) Anmeldetag: **23.06.2015**

(51) Int Cl.:
*E21B 47/022* (2012.01)          *E21B 47/08* (2012.01)
*E21B 47/01* (2012.01)           *E02D 5/34* (2006.01)
*E02D 5/18* (2006.01)            *G01S 7/52* (2006.01)
*G01S 15/88* (2006.01)           *G01S 15/89* (2006.01)

(54) **MESSVORRICHTUNG UND VERFAHREN ZUR VERMESSUNG EINES LOCHES IM BODEN**

DEVICE AND METHOD FOR MEASURING A HOLE IN THE GROUND

DISPOSITIF ET PROCÉDÉ DE MESURE D'UN TROU DANS LE SOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.12.2016   Patentblatt 2016/52**

(73) Patentinhaber: **BAUER Spezialtiefbau GmbH
86529 Schrobenhausen (DE)**

(72) Erfinder:
- **Daubner, Marcus
  86551 Aichach (DE)**
- **Gabelunke, Kai
  04109 Leipzig (DE)**

(74) Vertreter: **Wunderlich, Rainer et al
Weber & Heim
Patentanwälte
Partnerschaftsgesellschaft mbB
Irmgardstrasse 3
81479 München (DE)**

(56) Entgegenhaltungen:
AT-B- 296 898          GB-A- 2 156 984
US-A- 2 595 241         US-A- 4 161 715
US-A1- 2005 281 134

- **"Koden Ultrasonic Drilling Monitor DM-604/604", , 17. September 2011 (2011-09-17), XP055231288, Gefunden im Internet: URL:https://www.koden-electronics.co.jp/eng/industrial/pdf/industrial/dm602604-e.pdf [gefunden am 2015-11-25]**

EP 3 109 399 B1

**Beschreibung**

Die Erfindung betrifft eine Messvorrichtung zur Vermessung eines Loches im Boden, mit mindestens einer in das Loch absenkbaren Messsonde, welche mindestens einen Messsignalsender zum Aussenden eines Messsignals und mindestens einen Messsignalempfänger zum Empfangen des an einem Wandbereich des Loches reflektierten Messsignals aufweist, sowie einer Auswerteeinheit zur Bestimmung eines Wandabstandes zwischen dem Messsignalsender und dem Wandbereich des Loches, wobei dem empfangenen, reflektierten Messsignal eine Messdistanz anhand einer Zuordnungsvorschrift zuordbar ist, gemäß dem Oberbegriff des Anspruchs 1.

Die Erfindung betrifft weiterhin ein Messverfahren zur Vermessung eines Loches im Boden, bei dem mindestens eine Messsonde mit einer Absenkeinrichtung in mindestens eine Absenkposition in das Loch abgesenkt wird, mindestens ein Messsignalsender der Messsonde ein Messsignal in Richtung eines Wandbereiches des Loches aussendet, mindestens ein Messsignalempfänger der Messsonde das an dem Wandbereich des Loches reflektierte Messsignal empfängt und eine Auswerteeinheit einen Wandabstand zwischen dem Messsignalsender und dem Wandbereich des Loches bestimmt, wobei dem empfangenen reflektierten Messsignal eine Messdistanz anhand einer Zuordnungsvorschrift zugeordnet wird, gemäß dem Oberbegriff des Anspruchs 10.

Zur Herstellung von Löchern im Boden können Tiefbaugeräte mit entsprechenden Werkzeugen eingesetzt werden. Diese können insbesondere Bohrwerkzeuge zur Herstellung von Bohrlöchern oder Schlitzwandfräsen zur Herstellung von Schlitzwandlamellen sein. Zur Stützung des an das Loch anstehenden Bodens können die Löcher mit einem flüssigen Medium, insbesondere mit Betonitsuspension als Stützflüssigkeit verfüllt werden. Anschließend wird das Loch mit einem aushärtbarem Medium, etwa Beton, verfüllt, um einen Bohrpfahl oder ein Schlitzwandelement zu bilden. Durch eine aneinander angrenzende Anordnung vieler Pfahle oder Schlitzwandelemente kann eine Bohrpfahlwand oder Schlitzwand im Beton gebildet werden. Damit diese Wände im Boden insbesondere gegen einen Grundwasserdurchtritt dicht sind, müssen eine exakte Position und Form der Bohrungen oder Schlitze sichergestellt sein.

Hierzu ist es bekannt, nach und/oder während der Herstellung des Loches eine eventuelle Abweichung des Lochverlaufes von einer vorgegebenen Richtung, insbesondere der Lotrechten, mittels einer Vermessung der Lochwand zu ermitteln. Eine solche Vermessung kann mit Abstandssensoren erfolgen. Derartige Abstandssensoren können dem Fachmann in bekannter Weise dazu dienen, Koordinaten von Einzelpunkten oder eines flächenhaften Punktrasters der Lochwand zu bestimmen.

Als Abstandssensor ist es dem Fachmann bekannt, beispielsweise einen KODEN Ultraschall-Abstandssensor, der beispielsweise in der Produktbeschreibung "Koden Ultrasonic Drilling Monitor DM-602/604" von KODEN Electronics Co. beschrieben ist, zu verwenden. Bei den bekannten Systemen sind Messungenauigkeiten nicht ausgeschlossen. Angrenzende Bohrpfähle und Schlitze werden daher mit einer gewissen Überschneidung angeordnet. Je höher der Grad der Überschneidung, umso höher ist der Arbeits- und Materialaufwand zum Erstellen einer Bohrpfahl- oder Schlitzwand.

US 4 161 715 A beschreibt eine Messsonde zur Vermessung eines Salzstocks, wobei die Messsonde durch ein Bohrloch in den Salzstock abgesenkt wird. Zur Abstandsmessung werden Laserstrahlen von der Messsonde ausgesendet.

Der Erfindung liegt die **Aufgabe** zugrunde, eine Messvorrichtung und ein Messverfahren zur Vermessung eines Loches im Boden anzugeben, mit welchen eine besonders exakte und zuverlässige Vermessung ermöglicht ist und welche flexibel einsetzbar sind.

Die Aufgabe wird nach der Erfindung zum einen durch eine Messvorrichtung mit den Merkmalen des Anspruchs 1 und zum anderen mit einem Messverfahren mit den Merkmalen des Anspruchs 10 gelöst. Bevorzugte Ausführungen der Erfindung sind in den jeweils abhängigen Ansprüchen angegeben.

Die erfindungsgemäße Messvorrichtung umfasst eine mit der Messsonde verbundene Kalibriereinrichtung, welche mindestens ein Kalibrierelement aufweist, wobei durch das Kalibrierelement eine Kalibrierdistanz zu mindestens einem Kalibriersignalsender vorgegeben und definiert ist, wobei der Kalibriersignalsender zum Aussenden eines Kalibriersignals ausgebildet ist, welches an dem Kalibrierelement reflektierbar ist, wobei mindestens ein Kalibriersignalempfänger zum Empfangen des an dem Kalibrierelement reflektierten Kalibriersignals ausgebildet ist und wobei durch die Auswerteeinheit die Zuordnungsvorschrift anhand des vom Kalibrierelement reflektierten und empfangenen Kalibriersignals änderbar und kalibrierbar ist.

Die Erfindung beruht auf der Erkenntnis, dass beim Vermessen eines mit Suspension gefüllten Loches die Dichte und Konsistenz der Suspension das Messsignal in nicht unerheblichem Maß beeinflussen. Des Weiteren wurde erkannt, dass sich insbesondere bei mit Betonitsuspension gefüllten Bohrlöchern, welche eine Tiefe von 20 m und mehr erreichen können, die Dichte und Konsistenz über die Tiefe verändert.

Ein erster Aspekt der Erfindung besteht darin, dass eine mit der Messsonde verbundene Kalibriereinrichtung vorgesehen ist, welche mindestens ein Kalibrierelement aufweist und dass durch das Kalibrierelement eine Kalibrierdistanz zu dem Kalibriersignal-sender vorgegeben und definiert ist. Durch das erfindungsgemäße Kalibrierelement ist ein Abstand durch die Kalibrierdistanz zwischen dem Kalibriersignalsender und dem Kalibrierelement bekannt, welcher beim Absenken der Messsonde in das Loch unverändert konstant bleibt. Das Kalibrierelement ist dabei seitlich mit der Messsonde, über die Kalibriereinrichtung, starr verbunden. Die Kalibrierdistanz steht unabhängig von der Positionierung und Ausrichtung der Messsonde für eine Kalibrierung der Zuordnungsvorschrift und/oder Vergleichsmessung zur Verfügung. Hierdurch kann eine die Messgenauigkeit beeinflussende Änderung der Suspension festgestellt und eine Anpassung und Kalibrierung der Zuordnungsvorschrift durch die Messvorrichtung selbst durchgeführt werden.

Unter der Kalibrierung der Zuordnungsvorschrift kann im Rahmen der Erfindung als ein erster Schritt der Kalibrierung ein Feststellen der Abweichung eines gemessenen Distanzwertes zu einem vorgegebenen Distanzwert und als ein zweiter Schritt das Ableiten einer Korrektur aus diesem ersten Schritt zur Anbringung der Korrektur an weitere oder denselben gemessenen Distanzwert verstanden werden.

Ein zweiter Aspekt der Erfindung besteht darin, dass ein Kalibriersignalsender zum Aussenden eines Kalibriersignals ausgebildet ist, welches an dem Kalibrierelement reflektierbar ist und dass der Kalibriersignalempfänger zum Empfangen des an dem Kalibrierelement reflektierten Kalibriersignals ausgebildet ist. Gemäß der Erfindung ist unter dem Kalibriersignal ein dem Messsignal gleiches oder ähnliches Signal zu verstehen. Dabei durchläuft das Kalibriersignal zwischen Aussenden und Empfangen desselben einen Kalibriersignalpfad, welcher sich wie der Messsignalpfad innerhalb des in dem Bereich des Loches befindlichen, gleichen oder ähnlichen Medium befindet. Der Kalibriersignalsender für das Kalibriersignal kann vorzugsweise der selbe Signalsender sein, der auch das reguläre Messsignal aussendet. Es kann aber auch ein separater Sender für das Kalibriersignal vorgesehen sein.

Der Erfindung liegt ein dritter Aspekt zugrunde, dass durch die Auswerteeinheit die Zuordnungsvorschrift anhand des vom Kalibrierelement reflektierten und empfangenen Kalibriersignals änderbar und kalibrierbar ist. Diesem Aspekt der Erfindung liegt die Erkenntnis zugrunde, dass die Eigenschaften des Mediums in einem Loch im Boden, insbesondere eines flüssigen Mediums, nicht konstant innerhalb des Loches sind und somit nicht zuverlässig angenommen werden können.

Ein Messprinzip nach der Erfindung kann vorzugsweise auf dem Prinzip der Laufzeitmessung beruhen. Dabei wird eine Laufzeit t eines ausgesendeten, reflektierten und wieder empfangenen Signals durch die Auswerteeinheit gemessen. Dabei durchläuft das Messsignal entlang eines Signalpfades auf einem Hin- und Rückweg das im Signalpfad vorliegende Medium, das eine Ausbreitungsgeschwindigkeit $c_s$ des Messsignals entlang dem Signalpfad zulässt. Unter Kenntnis oder Annahme der Ausbreitungsgeschwindigkeit $c_s$ und mit der gemessenen Signallaufzeit t, kann eine Messdistanz d zwischen dem Messsignalsender und dem Wandbereich des Loches an dem das Messsignal reflektiert wurde nach einer Zuordnungsvorschrift, insbesondere auch mit dem folgenden grundlegenden Zusammenhang

$$d = 0,5 \cdot c_s \cdot t$$

abgeleitet werden. Da die Ausbreitungsgeschwindigkeit $c_s$ und/oder die Signallaufzeit t mit systematischen und/oder zufälligen Unsicherheiten versehen sind, kann auch die Messdistanz d eine entsprechend hohe Unsicherheit aufweisen. Dadurch entspricht die bestimmte Messdistanz d nicht dem tatsächlichen Wandabstand zwischen Messsignalsender und dem zu vermessenden Wandbereich des Lochs.

Diese Unsicherheit wird durch die Erfindung mit einer Selbstkalibrierung weitgehend ausgeschaltet.

Es können auch andere Messprinzipien eingesetzt werden, etwa basierend auf einer Frequenz- oder Signalstärkeänderung des Messsignals.

Nach der Erfindung wird unter der Zuordnungsvorschrift eine Vorschrift zur Zuordnung des ausgesendeten, reflektierten und empfangenen Signals, zu einer Distanz verstanden. Eine Zuordnungsvorschrift, insbesondere der oben genannte funktionale Zusammenhang zur Laufzeitmessung, ist dabei abhängig von der Annahme der Ausbreitungsgeschwindigkeit $c_s$. Im Rahmen der Erfindung wurde erkannt, dass sich die Ausbreitungsgeschwindigkeit $c_s$ eines Signals in Abhängigkeit der Absenkposition im Loch ändern kann, da sich die Dichte und Konsistenz der Füllsuspension über Tiefe des Loches erheblich ändern kann.

Unter der Kalibrierung der Zuordnungsvorschrift kann im Rahmen der Erfindung ferner als ein erster Schritt ein Feststellen der Ausbreitungsgeschwindigkeit $c_s$ mittels der Laufzeit des Kalibriersignals und dem vorgegebenen Abstand (Kalibrierdistanz), beides zwischen Messsignalsender und Kalibrierelement, und als ein zweiter Schritt das Verwenden der festgestellten Ausbreitungsgeschwindigkeit $c_s$ aus dem ersten Schritt zur Bestimmung des Wandabstandes mit dem oben genannten funktionalen Zusammenhang verstanden werden. Damit ist eine Kalibrierung und Änderung der Zuordnungsvorschrift bewirkt.

Den Aspekten der Erfindung liegt die wesentliche Erkenntnis zugrunde, dass sich die physikalischen Eigenschaften eines Mediums in einem Loch im Boden und damit insbesondere die Ausbreitungsgeschwindigkeit $c_s$ eines Messsignals, insbesondere eines Ultraschallmesssignals, in örtlicher und zeitlicher Abhängigkeit ändern. Durch das Mitabsenken des mit der Messsonde starr verbundenen Kalibrierelementes steht unabhängig von der Absenkposition ständig eine definierte Kalibrierdistanz zur Verfügung. Durch diese Distanz wird mit dem empfangenen Signal, insbesondere mit der Laufzeit des Signals, die Bestimmung physikalischer Eigenschaften, insbesondere der Ausbreitungsgeschwindigkeit $c_s$ durch entsprechendes Auflösen des genannten funktionalen Zusammenhangs, an jeder Absenkposition der Messsonde unter den für die Messung gültigen Umgebungsbedingungen, insbesondere den physikalischen Eigenschaften wie Druck, Temperatur und Dichte des Mediums, ermöglicht. Eine besonders bevorzugte Ausführungsform besteht nach der Erfindung darin, dass der Messsignalsender und der Messsignalempfänger in Kombination als mindestens ein Messsignaltransceiver ausgebildet sind, wobei der Messsignaltransceiver zum Aussenden des Messsignals und zum Empfangen des an dem Wandbereich des Loches reflektierten Messsignals ausgebildet ist. Der Messsignaltransceiver ist in der Lage, sowohl das Messsignal als auch das Kalibriersignal auszusenden und zu empfangen. Durch Kombination des Senders und Empfängers in einem Sensorsystem als Transceiver ist die notwendige Sensorik zum Aussenden und Empfangen der Signale platzsparend in der Messsonde anordbar. Durch die Verringerung notwendiger Bauteile des Sensorsystems sind insbesondere ein höherer Integrationsgrad und eine verbesserte Zuverlässigkeit der Sensorik gegeben.

Grundsätzlich kann der Messsignalsender, Messsignalempfänger und Messsignaltransceiver ein beliebiger Sender, Empfänger und Transceiver von Ultraschallmesssignalen sein.

Für die Abstandsbestimmung in einem mit einem flüssigen Medium gefüllten Loch im Boden ist es nach der Erfindung vorteilhaft, dass das Messsignal ein Ultraschallsignal ist. Ultraschallabstandssensoren und insbesondere Ultraschalltransceiver können Abstände in unterschiedlichen Medien bestimmen. Dabei kann Ultraschall auch flüssige Medien, insbesondere Bentonitsuspension und Wasser in Löchern im Boden durchlaufen.

Für die Vermessung eines Loches im Boden ergibt sich nach einer Weiterbildung der Erfindung ein besonders zweckmäßiger Betrieb dadurch, dass eine Absenkeinrichtung, insbesondere eine oberhalb des Loches angeordnete Windeneinrichtung, und mindestens ein an der Absenkeinrichtung befestigtes und mit der Messsonde verbundenes Absenkseil zum Absenken der Messsonde in das Loch vorgesehen sind, wobei die Absenkeinrichtung ausgebildet ist, das mindestens eine Absenkseil aufzunehmen und abzugeben. Zum Absenken der Messsonde in eine bestimmte Absenkposition wird das Absenkseil mit einer bestimmten Absenklänge in das Loch von der Windeneinrichtung abgegeben. Die Messsonde ist dabei insbesondere durch zwei Absenkseile mit der Windeneinrichtung verbunden, wobei die Messsonde an ihrer Oberseite einen Bügel aufweist, der mit den jeweiligen abgesenkten Enden der Absenkseile an seinen beiden Bügelenden verbunden ist und die Messsonde in dessen Mitte kippbar hält. Grundsätzlich ist es möglich, ein Sondenkabel mit entsprechender Zugentlastung durch die zwei Absenkseile zwischen der Messsonde und der Auswerteeinrichtung zur Daten- und/oder Stromversorgung vorzusehen. Besonders bevorzugt ist es jedoch, wenn mindestens eines der Absenkseil als Sonden- und/oder Messkabel ausgebildet ist. Die Messsonde und die Absenkeinrichtung sind ferner insbesondere transportabel ausgebildet.

Dabei ergibt sich eine weitere vorteilhafte Ausgestaltung der Erfindung dadurch, dass das mindestens eine Absenkseil parallel zu einer Absenkachse in mindestens einer Absenkposition der Messsonde im Loch anordbar ist, wobei die Absenkachse einer Einmessachse eines Tiefbauwerkzeuges zur Erstellung des Loches entspricht. Die Einmessachse des Tiefbauwerkzeuges dient dabei als Referenzachse für Abstandsmessungen der Messsonde zu einem Wandbereich des Loches, welche insbesondere in horizontaler Weise orthogonal zur Referenzachse erfolgen. Durch Anordnung des Absenkseils lotrecht zur Bodenoberfläche und parallel zu der Absenkachse in mindestens einer Absenkposition beziehen sich alle Abstandsbestimmungen der Messsonde ausgehend von entsprechenden Absenkpositionen entlang der Absenkachse in gleicher Weise auf die Referenzachse.

Grundsätzlich können Abstände des Loches zu einer Achse in beliebiger räumlicher und zeitlicher Auflösung bestimmt werden. Besonders effizient ist es nach einer Ausführungsform der Erfindung, dass der mindestens eine Messsignalsender sowie der mindestens eine Messsignalempfänger zum Aussenden und Empfangen von Messsignalen in fortlaufender Weise ausgebildet sind. Durch das Aussenden und Empfangen von Messsignalen in fortlaufender Weise ist auch das Bestimmen von Wandabständen in fortlaufender Weise ermöglicht. Als Messergebnisse sind dadurch Koordinaten des Loches in gleichmäßiger Auflösung, insbesondere in Zentimeter- oder Dezimeterabständen verfügbar.

Eine weitere vorteilhafte Ausgestaltung der Erfindung ergibt sich dadurch, dass die Messsonde und die Kalibriereinrichtung von einem zumindest teilweise offenen Gehäuserahmen umgeben sind, dass der Gehäuserahmen eine Symmetrieachse parallel zur Absenkachse aufweist und dass der gemeinsame Schwerpunkt der Messsonde der Kalibriereinrichtung und des Gehäuserahmens auf der Absenkachse liegt. Der Gehäuserahmen, welcher zumindest teilweise zum Freihalten der Signalpfade offen ist, bietet der Kalibriereinrichtung, welche mit der Messsonde verbunden ist, Schutz vor äußeren Krafteinwirkungen, insbesondere vor Stößen. Diese Stöße könnten die vorgegebene Kalibrierdistanz in unerwünschter Weise ändern, wodurch der definierte Abstand zwischen Messsignalsender, -empfänger und/oder -transceiver und Kalibrierelement nicht mehr definiert wäre. Eine Symmetrie des Gehäuserahmens, insbesondere eine Rotationssymmetrie desselben zur Mittelachse des Gehäuserahmens, welche beim Absenken der Absenkachse entspricht, ermöglicht eine gleichmäßige Absenkung der Messsonde mit dem Gehäuserahmen, ohne dass der Gehäuserahmen abdriftet. Um ein Verkippen und Verdrehen der Messsonde beim Absenken zu verhindern, befindet sich der Schwerpunkt der Messsonde, der Kalibriereinrichtung und des Gehäuserahmens auf der Absenkachse.

Grundsätzlich kann das Kalibrierelement ein beliebiger Reflektor oder auch ein aktiver Sender zum Reflektieren oder Aussenden von weiteren Signalen sein. Besonders vorteilhaft ist jedoch, nach einer Ausführungsform der Erfindung, dass das erfindungsgemäße Kalibrierelement eine zum Kalibriersignalsender orthogonal ausgerichtete Fläche aufweist. Durch die orthogonale Ausrichtung der Fläche zum Kalibriersignalsender können Signale in besonders günstiger Weise reflektiert werden. Besonders vorteilhaft ist es außerdem, dass die Fläche die gleichen oder ähnlichen Eigenschaften wie der Wandbereich des Loches, auf dem Messsignale reflektiert werden, aufweist. Aufgrund der Reflektionseigenschaften, insbesondere aufgrund der empfangenen Signalintensität, ist es somit alternativ ermöglicht, auch anhand der Signalintensität Rückschlüsse auf die Kalibrier- und/oder Messdistanz zu ziehen.

Ferner ist es nach einer weiteren bevorzugten Ausgestaltung der Erfindung vorteilhaft, dass zum Aussenden des Kalibriersignals auf das Kalibrierelement ein separater Kalibriersignalsender und/oder zum Empfangen des an dem Kalibrierelement reflektierten Kalibriersignals ein separater Kalibriersignalempfänger vorgesehen ist. Das Kalibriersignal kann gleich oder ähnlich einem ebenfalls ausgesandten Messsignal sein. Durch Aussenden eines Signals auf das Kalibrierelement und/oder den Wandbereich, wobei sich das Kalibrierelement mindestens teilweise in einem Signalpfad befinden, kann das Kalibriersignal zeitlich versetzt zu dem ebenfalls ausgesendeten Messsignal reflektiert werden und mit doppeltem zeitlichen Versatz wieder empfangen werden. Das empfangene Kalibriersignal dient anschließend der Kalibrierung des empfangenen Messsignals. Dabei ist insbesondere unter Kenntnis der Kalibrierdistanz die Ausbreitungsgeschwindigkeit des Signals bestimmbar und zur Bestimmung des Wandabstandes heranzuziehen. Ferner ist es auch umsetzbar, dass der Messsignalsender auch der Kalibriersignalsender und der Messsignalempfänger auch der Kalibriersignalempfänger ist. Der Kalibriersignalsender und der Kalibriersignalempfänger können in Kombination auch als Kalibriersignaltransceiver ausgebildet sein.

Eine weitere vorteilhafte Ausgestaltung der Erfindung besteht darin, dass jeweils eine Vielzahl von Messsignalsendern und Messsignalempfängern, insbesondere jeweils zwei, drei oder vier Messsignalsender und Messsignalempfänger vorgesehen sind. Durch das Vorsehen von mehreren Sendern, Empfängern und/oder Transceivern, kann an einer Absenkposition eine mehrfache, insbesondere entgegengesetzte, oder radial fächerartige Abstandsbestimmung erfolgen. Dabei kann für jeden Sender, Empfänger und/oder Transceiver eine Kalibriereinrichtung in dem jeweiligen Signalpfad vorgesehen sein, oder eine einzelne Kalibriereinrichtung in einem einzigen Signalpfad an der Messsonde angebracht sein. Die radiale Auflösung der Abstandsmessungen kann weiter gesteigert werden, indem durch ein Verdrehen der Messsonde um die Absenkachse mehrfache Messungen in einzelnen Drehpositionen erfolgen. Durch die Vermessung des Loches an einer Vielzahl von Absenk- und/oder Drehpositionen mit jeweils einer Vielzahl von einzelnen Abstandsmessungen kann aus mehreren zweidimensionalen Schnittprofilen des Loches als Messergebnis auch ein dreidimensionales Modell des Loches und/oder des Lochverlaufs erzeugt werden. Hinsichtlich des Verfahrens wird die eingangs genannte Aufgabe gemäß der Erfindung dadurch gelöst, dass durch mindestens einen Kalibriersignalsender ein Kalibriersignal zu einer Kalibriereinrichtung mit mindestens einem Kalibrierelement, welche seitlich mit der Messsonde verbunden ist, ausgesendet wird, wobei das Kalibrierelement in einer vorgegebenen Kalibrierdistanz zu dem Kalibriersignalsender angeordnet ist, dass das Kalibriersignal an dem Kalibrierelement reflektierbar wird, dass das reflektierte Kalibriersignal von mindestens einem Kalibriersignalsender empfangen wird und dass die Auswerteinheit die Zuordnungsvorschrift anhand des empfangenen Kalibriersignals ändert und kalibriert. Durch diese die Vermessung des Loches begleitende Kalibrierung der Zuordnungsvorschrift, ist es ermöglicht, die durch die Zuordnungsvorschrift zugeordneten Messdistanzen entsprechend den Umgebungsbedingungen, insbesondere der Signalausbreitungsgeschwindigkeit, anzupassen. Durch Kalibrierung der Zuordnungsvorschrift wird die Abweichung der zugeordneten Messdistanz zu dem tatsächlichen Wandabstand korrigiert.

Eine vorteilhafte Ausführung des Verfahrens besteht nach der Erfindung darin, dass das Kalibriersignal gleichzeitig oder zeitlich versetzt zu dem Messsignal ausgesendet wird. Da sich Umgebungsbedingungen während der Messung zeitlich und örtlich ändern können, ist es besonders vorteilhaft, das Kalibriersignal simultan für eine Korrektur der Messdistanz, welche dem Messsignal zugeordnet ist, heranzuziehen. Ferner vorteilhaft für die Ausführung des Verfahrens ist, dass die Zuordnungsvorschrift bei der Bestimmung einer Vielzahl von Wandabständen an einer Vielzahl von Absenkpositionen im Loch geändert und kalibriert wird. Neben der zeitlichen Änderung der Umgebungsbedingungen, insbesondere dem Druck, der Temperatur und der Dichte des Mediums, ändern sich die Umgebungsbedingungen auch mit der Absenkposition im Loch. Die Kalibrierung der Zuordnungsvorschrift erfolgt somit positionsabhängig und automatisiert, wobei zwischen einzelnen Absenk- und/oder Kalibrierpositionen die für die Kalibrierung notwendigen Korrekturwerte, insbesondere die korrigierte Signalausbreitungsgeschwindigkeit, auch mittels Interpolation bestimmt werden können.

Für die Genauigkeit und Zuverlässigkeit des Messverfahrens ist es nach einer weiteren Ausführungsvariante des Verfahrens besonders vorteilhaft, dass Messsignale bei einem Absenken und einem Wiederzutageziehen der Messsonde ausgesendet und empfangen werden, wobei die beim Wiederzutageziehen der Messvorrichtung von der Auswerteeinheit bestimmten Wandabstände zur Kontrolle der beim Absenken ermittelten Wandabstände herangezogen werden. Durch eine solche redundante, insbesondere zweifache Vermessung gleicher oder ähnlicher Wandbereiche des Loches kann die Genauigkeit der Messergebnisse kontrolliert werden und/oder ein zeitliches Abdriften der Genauigkeit der Messergebnisse erkannt werden. Diese Ungenauigkeiten und ein solches Abdriften kann auch dadurch entstehen, dass die Messsonde beim Absinken und/oder beim Wiederzutageziehen die Absenkachse verlässt.

Weiter ist nach der Erfindung ein Verfahren zum Herstellen einer Wand im Boden vorgesehen, welche aus mehreren aneinander angrenzenden Wandelementen gebildet wird, wobei für jedes Wandelement ein Loch erstellt wird, das Loch vermessen wird und das Loch mit einer aushärtbaren Masse zum Bilden des Wandelements verfüllt wird. Dabei ist die Erfindung dadurch gekennzeichnet, dass das zuvor beschriebene Messverfahren zum Vermessen mindestens eines Loches eingesetzt wird.

Die Erfindung wird nachfolgend anhand von einem bevorzugten Ausführungsbeispiel weiter erläutert, welches schematisch in der beigefügten Zeichnung dargestellt ist. Dabei zeigt:

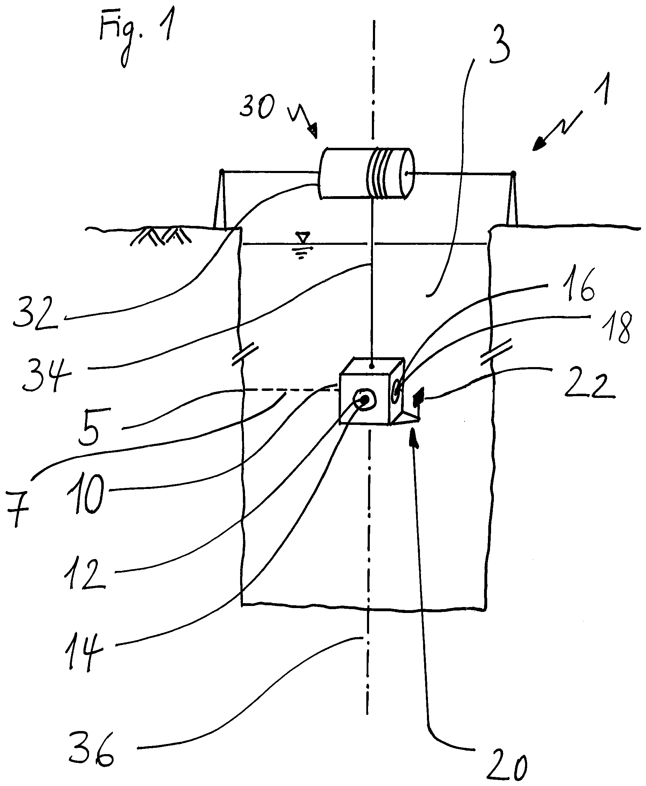

Fig. 1    eine perspektivische Ansicht einer erfindungsgemäßen Messvorrichtung in einem Loch im Boden.

Eine Ausführungsform einer erfindungsgemäßen Messvorrichtung 1 wird nachfolgend im Zusammenhang mit der Fig. 1 erläutert. Die Messumgebung für die Messvorrichtung 1 besteht unter anderem aus einem Loch 3 im Boden. Das Loch 3 ist unverrohrt und mit einem flüssigen Medium, hier Betonitsuspension, gefüllt. Die Messsonde 10 befindet sich innerhalb des Loches 3 und ist von der Betonitsuspension umgeben. Das Loch 3 wurde von einem Tiefbaugerät abgeteuft. Dabei liegt eine Einmessachse 36 des Tiefbaugerätes vor, welche der Absenkachse 36 der Messvorrichtung 1 entspricht. Diese Achsen sind lotrecht und entsprechen zumindest abschnittsweise nicht der Mittelachse des Loches 3, welche nicht dargestellt ist.

Zur Absenkung der Messsonde 10 im Loch 3 ist oberhalb des Loches 3 eine Absenkeinrichtung 30 angeordnet. Die Absenkeinrichtung 30 weist dabei insbesondere eine Windeneinrichtung 32 auf, auf deren Trommel das Absenkseil 34, welches mit der Messsonde 10 verbunden ist, aufgewickelt ist. Die Windeneinrichtung 32 kann dabei in einer beliebigen Absenkposition der Messsonde 10 im Loch 3 arretiert werden. Alternativ kann die Messsonde 10 kontinuierlich mit konstanter Absenkgeschwindigkeit in das Loch 3 abgesenkt werden. Die Windeneinrichtung 32 ist ebenfalls in der Lage, die Messsonde 10 nach Erreichen der vollständigen Absenktiefe in einem unteren Bereich des Loches 3, die Messsonde 10 wiederzutagezuziehen, wobei dies ebenfalls entlang der Absenkachse 36 erfolgt.

Die Messsonde 10, welche in diesem Ausführungsbeispiel schematisch als Würfel dargestellt ist, weist drei Messsignalsender 12 und drei Messsignalempfänger 14 auf, von denen jeweils einer in der perspektivischen Ansicht sichtbar ist. Die Messsignalsender 12 und Messsignalempfänger 14 befinden sich dabei mittig an drei der senkrechten Würfelflächen. Die Messsonde 10 ist wasserdicht konzipiert, wobei insbesondere die Messsignalsender 12 und Messsignalempfänger 14 vor einem Eindringen der Betonitsuspension geschützt sind. Die Messsonde 10 weist weiter einen Kalibriersignalsender 16 und einen Kalibriersignalempfänger 18 auf, welche sich mittig an der vierten senkrechten Würfelfläche befinden. An der Messsonde 10 ist seitlich der vierten Würfelfläche eine Kalibriereinrichtung 20 angebracht, welche aus mehreren Streben und einem an diesen gehaltenen Kalibrierelement 22 besteht. Der Abstand zwischen Kalibriersignalsender 16 und Kalibrierelement 22 beträgt in diesem Ausführungsbeispiel zwischen 10 cm und 50 cm. Die Kalibriereinrichtung 20, welche das Kalibrierelement 22 hält, ist dabei starr und fest mit der Messsonde 10 verbunden. Während sich zwischen den Messsignalsendern 12 und Messsignalempfängern 14 und den entsprechenden Wandbereichen 5 des Loches 3 entsprechende Wandabstände 7 erstrecken, ist zwischen dem Kalibriersignalsender 16, welcher sich an derselben Würfelseite wie das Kalibrierelement 22 befindet eine Kalibrierdistanz zu dem Kalibrierelement 22 ausgebildet. Diese Konstellation dient der Korrektur aller Messdistanzen durch eine Kalibrierung der Zuordnungsvorschrift. Bei dem Ausführungsbeispiel kann optional auch vorgesehen sein, den Kalibriersignalsender 16 auch als zusätzlichen vierten Messsignalsender 12 zu verwenden, wobei das Kalibrierelement sich teilweise im Signalpfad zwischen Kalibriersignalsender 16 und einem entsprechenden zu vermessenden Wandbereich 5 befindet, wobei eine Signalantwort von dem Kalibrierelement 22 und dem Wandbereich 5 zeitlich versetzt reflektiert wird.

**Patentansprüche**

1.  Messvorrichtung (1) zur Vermessung eines Loches (3) im Boden, mit

- mindestens einer in das Loch (3) absenkbaren Messsonde (10), welche

-- mindestens einen Messsignalsender (12),
-- mindestens einen Messsignalempfänger (14) zum Empfangen eines Ultraschallmesssignals, von einem Wandbereich (5) des Loches (3),
-- einen Kalibriersignalsender (16) zum Aussenden eines Ultraschallkalibriersignals auf ein Kalibrierelement (22) und
-- einen Kalibriersignalempfänger (18) zum Empfangen eines an dem Kalibrierelement (22) reflektierten Ultraschallkalibriersignals aufweist,

- sowie einer Auswerteeinheit zur Bestimmung eines Wandabstandes (7) zwischen dem Messsignalsender (12) und dem Wandbereich (5) des Loches (3), wobei dem empfangenen Ultraschallmesssignal eine Messdistanz anhand einer Zuordnungsvorschrift zugeordnet wird,
- wobei durch die Auswerteeinheit die Zuordnungsvorschrift anhand des vom Kalibrierelement reflektierten und empfangenen Ultraschallkalibriersignals geändert und kalibriert wird,

**dadurch gekennzeichnet,**

- **dass** das Kalibrierelement (22) seitlich an der Messsonde (10) mit einer definierten Kalibrierdistanz starr angebracht ist, und
- **dass** der Messsignalsender (12) zum Aussenden von Ultraschallmesssignalen seitlich in Richtung des Wandbereichs des Lochs ausgebildet ist.

2. Messvorrichtung nach Anspruch 1,
**dadurch gekennzeichnet,**
**dass** der Messsignalsender (12) und der Messsignalempfänger (14) in Kombination als mindestens ein Messsignaltransceiver ausgebildet ist, wobei der Messsignaltransceiver zum Aussenden des Messsignals und zum Empfang des an dem Wandbereich (5) des Loches (3) reflektierten Messsignals ausgebildet ist.

3. Messvorrichtung nach einem der Ansprüche 1 oder 2,
**dadurch gekennzeichnet,**
**dass** eine Absenkeinrichtung (30), insbesondere eine oberhalb des Loches (3) angeordnete Windeneinrichtung (32), und mindestens ein an der Absenkeinrichtung (30) befestigtes und mit der Messsonde (10) verbundenes Absenkseil (34) zum Absenken der Messsonde (10) in das Loch (3) vorgesehen sind, wobei die Absenkeinrichtung (30) ausgebildet ist, das mindestens eine Absenkseil (34) aufzunehmen und abzugeben.

4. Messvorrichtung nach Anspruch 3,
**dadurch gekennzeichnet,**
**dass** das mindestens eine Absenkseil (34) parallel zu einer Absenkachse (36) in mindestens einer Absenkposition der Messsonde (10) im Loch anordbar ist, wobei die Absenkachse (36) einer Einmessachse (36) eines Tiefbauwerkzeuges zur Erstellung des Loches (3) entspricht.

5. Messvorrichtung nach einem der Ansprüche 1 bis 4,
**dadurch gekennzeichnet,**
**dass** der mindestens eine Messsignalsender (12) sowie der mindestens eine Messsignalempfänger (14) zum Aussenden und Empfangen von Messsignalen in fortlaufender Weise ausgebildet sind.

6. Messvorrichtung nach einem der Ansprüche 1 bis 5,
**dadurch gekennzeichnet,**
**dass** die Messsonde (10) und die Kalibriereinrichtung (20) von einem zumindest teilweise offenen Gehäuserahmen umgeben sind,
**dass** der Gehäuserahmen eine Symmetrieachse parallel zur Absenkachse (36) aufweist und
**dass** der gemeinsame Schwerpunkt der Messsonde (10), der Kalibriereinrichtung (20) und des Gehäuserahmens auf der Absenkachse (36) liegt.

7. Messvorrichtung nach einem der Ansprüche 1 bis 6,
**dadurch gekennzeichnet,**
**dass** das Kalibrierelement (22) eine zum Kalibriersignalsender (16) orthogonal ausgerichtete Fläche aufweist.

8. Messvorrichtung nach einem der Ansprüche 1 bis 7,
**dadurch gekennzeichnet,**
**dass** zum Aussenden des Kalibriersignals auf das Kalibrierelement (22) ein separater Kalibriersignalsender (16) und/oder zum Empfangen des an dem Kalibrierelement (22) reflektierten Kalibriersignals ein separater Kalibriersignalempfänger (18) vorgesehen sind.

9. Messvorrichtung nach einem der Ansprüche 1 bis 8,
**dadurch gekennzeichnet,**
**dass** jeweils eine Vielzahl von Messsignalsendern (12) und Messsignalempfängern (14), insbesondere jeweils zwei, drei oder vier Messsignalsender (12) und Messsignalempfänger (14) vorgesehen sind.

10. Messverfahren zur Vermessung eines Loches (3) im Boden, mit einer Messvorrichtung gemäß Anspruch 1, bei dem

- mindestens eine Messsonde (10) mit einer Absenkeinrichtung (30) in mindestens eine Absenkposition in das Loch (3) abgesenkt wird,
- mindestens ein Messsignalsender (12) der Messsonde (10) vorhanden ist,
- mindestens ein Messsignalempfänger (14) der Messsonde (10) ein Ultraschallmess-signal von einem Wandbereich (5) des Loches (3) empfängt und
- ein Kalibriersignalsender (16) der Messsonde (10) ein Ultraschallkalibriersignal auf ein Kalibrierelement (22) aussendet,
- ein Kalibriersignalempfänger (18) der Messsonde (10) ein an dem Kalibrierelement (22) reflektiertes Ultraschallkalibriersignal empfängt,
- eine Auswerteeinheit einen Wandabstand (7) zwischen dem Messsignalsender (12) und dem Wandbereich (5) des Loches (3) bestimmt,
- wobei dem empfangenen Ultraschallmesssignal eine Messdistanz anhand einer Zuordnungsvorschrift zugeordnet wird und
- wobei die Auswerteinheit die Zuordnungsvorschrift anhand des vom Kalibrierelement reflektierten und empfangenen Ultraschallkalibriersignals ändert und kalibriert,

**dadurch gekennzeichnet,**

- **dass** das Kalibrierelement (22) seitlich an der Messsonde (10) mit einer definierten Kalibrierdistanz starr angebracht wird, und
- **dass** der Messsignalsender (12) Ultraschallmesssignale seitlich in Richtung des Wandbereichs des Lochs aussendet.

11. Messverfahren nach Anspruch 10,
    **dadurch gekennzeichnet,**
    **dass** das Kalibriersignal gleichzeitig oder zeitlich versetzt zu dem Messsignal ausgesendet wird.

12. Messverfahren nach einem der Ansprüche 10 oder 11,
    **dadurch gekennzeichnet,**
    **dass** die Zuordnungsvorschrift bei der Bestimmung einer Vielzahl von Wandabständen (7) an einer Vielzahl von Absenkpositionen im Loch (3) geändert und kalibriert wird.

13. Messverfahren nach einem der Ansprüche 10 bis 12,
    **dadurch gekennzeichnet,**
    **dass** Messsignale bei einem Absenken und einem Wiederzutageziehen der Messsonde (10) ausgesendet und empfangen werden, wobei die beim Wiederzutageziehen der Messsonde (10) von der Auswerteeinheit bestimmten Wandabstände (7) zur Kontrolle der beim Absenken ermittelten Wandabstände (7) herangezogen werden.

14. Verfahren zum Herstellen einer Wand im Boden, insbesondere einer Bohrpfahlwand oder Schlitzwand, welche aus mehreren einander angrenzenden Wandelementen gebildet wird, wobei

    - für jedes Wandelement ein Loch erstellt wird,
    - das Loch vermessen wird und
    - das Loch mit einer aushärtbaren Masse zum Bilden des Wandelementes verfüllt wird,

    **dadurch gekennzeichnet,**
    **dass** ein Messverfahren nach einem der Ansprüche 10 bis 13 zum Vermessen mindestens eines Loches eingesetzt wird.

**Claims**

1. Measuring device (1) for measuring a hole (3) in the ground, having

   - at least one measuring probe (10) that can be lowered into the hole (3), having

     ◦ at least one measurement signal transmitter (12),
     ◦ at least one measurement signal receiver (14) to receive an ultrasonic signal from a wall area (5) of the hole (3),
     ◦ a calibration signal transmitter (16) to transmit an ultrasonic calibration signal to a calibration element (22) and
     ◦ a calibration signal receiver (18) to receive an ultrasonic calibration signal reflected on the calibration element (22),

   - and an evaluation unit to determine a wall distance (7) between the measurement signal transmitter (12) and the wall area (5) of the hole (3), wherein a measurement distance can be assigned to the received ultrasonic measurement signal based on assignment rules,
   - wherein by means of the evaluation unit the assignment rules can be changed and calibrated based on the ultrasonic calibration signal reflected and received by the calibration element,

   **characterised in that**

   - the calibration element (22) is rigidly attached to the side of the measuring probe (10) with a defined calibration distance, and
   - the measurement signal transmitter (12) is designed to transmit the ultrasonic measurement signal laterally towards the wall area of the hole.

2. Measuring device according to claim 1,
   **characterised in that**
   the measurement signal transmitter (12) and the measurement signal receiver (14) are designed in combination as at least one measurement signal transceiver, wherein the measurement signal transceiver is designed to transmit the measurement signal and to receive the measurement signal reflected on the wall area (5) of the hole (3).

3. Measuring device according to one of claims 1 or 2,
   **characterised in that**
   a lowering means (30), in particular a winch means (32) arranged above the hole (3), and at least one lowering rope (34) attached to the lowering means (30) and connected to the measuring probe (10) are provided for lowering the measuring probe (10) into the hole (3), wherein the lowering means (30) is designed to receive and release the at least one lowering rope (34).

4. Measuring device according to claim 3, **characterised in that** the at least one lowering rope (34) can be arranged parallel to a lowering axis (36) in at least one lowering position of the measuring probe (10) in the hole, wherein the lowering axis (36) corresponds to a calibrating axis (36) of an underground engineering tool for creating the hole (3).

5. Measuring device according to one of claims 1 to 4, **characterised in that** the at least one measurement signal transmitter (12) and the at least one measurement signal receiver (14) are designed to transmit and receive measurement signals in a continuous way.

6. Measuring device according to one of claims 1 to 5, **characterised in that** the measuring probe (10) and the calibrating means (20) are surrounded by a housing frame that is open at least in part, the housing frame has a symmetry axis parallel to the lowering axis (36) and the common centre of gravity of the measuring probe (10), the calibrating means (20) and the housing frame lies on the lowering axis (36).

7. Measuring device according to one of claims 1 to 6, **characterised in that** the calibration element (22) has a surface orientated orthogonally with respect to the calibration signal transmitter (16).

8. Measuring device according to one of claims 1 to 7, **characterised in that** to transmit the calibration signal to the calibration element (22) a separate calibration signal transmitter (16) is provided and / or to receive the calibration signal reflected on the calibration element (22) a separate calibration signal receiver (18) is provided.

9. Measuring device according to one of claims 1 to 8, **characterised in that** a plurality of measurement signal transmitters (12) and measurement signal receivers (14), in particular respectively two, three or four measurement signal transmitters (12) and measurement signal receivers (14), are provided.

10. Measuring method for measuring a hole (3) in the ground with a measuring device according to claim 1, wherein

- at least one measuring probe (10) is lowered with a lowering means (30) into at least one lowering position in the hole (3),
- at least one measurement signal transmitter (12) of the measuring probe (10) is present,
- at least one measurement signal receiver (14) of the measuring probe (10) receives an ultrasonic measurement signal from a wall area (5) of the hole (3) and
- a calibration signal transmitter (16) of the measuring probe (10) transmits an ultrasonic calibration signal to a calibration element (22),
- a calibration signal receiver (18) of the measuring probe (10) receives an ultrasonic calibration signal reflected on the calibration element (22),
- an evaluation unit determines a wall distance (7) between the measurement signal transmitter (12) and the wall area (5) of the hole (3),
- wherein a measuring distance is assigned to the received ultrasonic measurement signal based on assignment rules and
- wherein the evaluation unit changes and calibrates the assignment rules based on the ultrasonic calibration signal reflected and received by the calibration element,

**characterised in that**

- the calibration element (22) is attached rigidly to the side of the measuring probe (10) with a defined calibration distance, and the measurement signal transmitter (12) transmits the ultrasonic measurement signal laterally towards the wall area of the hole.

11. Measuring method according to claim 10, **characterised in that** the calibration signal is transmitted simultaneously or temporally offset with respect to the measurement signal.

12. Measuring method according to one of claims 10 or 11, **characterised in that** the assignment rule is changed and calibrated in the determination of a plurality of wall distances (7) at a plurality of lowering positions in the hole (3).

13. Measuring method according to one of claims 10 to 12, **characterised in that** measurement signals are transmitted and received during lowering and raising to the surface again of the measuring probe (10), wherein the wall distances (7) determined by the evaluation unit during raising to the surface again of the measuring probe (10) are used to control the wall distances (7) detected during lowering.

**14.** Method for producing a wall in the ground, in particular a bored pile wall or diaphragm wall, which is formed from a plurality of wall elements adjacent to each other, wherein

- a hole is created for each wall element,
- the hole is measured and
- the hole is filled with a settable mass to form the wall element,

**characterised in that**

a measuring method according to one of claims 10 to 13 is used to measure at least one hole.

**Revendications**

**1.** Dispositif de mesure (1) pour la mesure d'un trou (3) dans le sol, avec

- au moins une sonde de mesure (10) abaissable dans le trou (3) qui présente

-- au moins un émetteur de signal de mesure (12),
-- au moins un récepteur de signal de mesure (14) pour la réception d'un signal de mesure à ultrasons d'une zone de paroi (5) du trou (3),
-- un émetteur de signal de calibrage (16) pour l'émission d'un signal de calibrage à ultrasons sur un élément de calibrage (22) et
-- un récepteur de signal de calibrage (18) pour la réception d'un signal de calibrage à ultrasons réfléchi sur l'élément de calibrage (22),

- ainsi qu'une unité d'évaluation pour la détermination d'une distance de paroi (7) entre l'émetteur de signal de mesure (12) et la zone de paroi (5) du trou (3), dans lequel une distance de mesure est associée au signal de mesure à ultrasons reçu à l'aide d'une prescription d'association,
- dans lequel la prescription d'association est modifiée et calibrée par l'unité d'évaluation à l'aide du signal de calibrage à ultrasons reçu et réfléchi par l'élément de calibrage,

**caractérisé en ce**

- **que** l'élément de calibrage (22) est monté rigidement latéralement sur la sonde de mesure (10) avec une distance de calibrage définie, et
- **que** l'émetteur de signal de mesure (12) est réalisé pour l'émission de signaux de mesure à ultrasons latéralement en direction de la zone de paroi du trou.

**2.** Dispositif de mesure selon la revendication 1, **caractérisé en ce**

**que** l'émetteur de signal de mesure (12) en combinaison avec le récepteur de signal de mesure (14) est réalisé en au moins un émetteur-récepteur de signal de mesure, dans lequel l'émetteur-récepteur de signal de mesure est réalisé pour l'émission du signal de mesure et pour la réception du signal de mesure réfléchi sur la zone de paroi (5) du trou (3).

**3.** Dispositif de mesure selon l'une des revendications 1 ou 2, **caractérisé en ce**

**qu'**un dispositif d'abaissement (30), en particulier un dispositif de treuil (32) agencé au-dessus du trou (3), et au moins un câble d'abaissement (34) fixé sur le dispositif d'abaissement (30) et relié à la sonde de mesure (10) sont prévus pour l'abaissement de la sonde de mesure (10) dans le trou (3), dans lequel le dispositif d'abaissement (30) est réalisé afin de recevoir et remettre l'au moins un câble d'abaissement (34).

**4.** Dispositif de mesure selon la revendication 3, **caractérisé en ce**

**que** l'au moins un câble d'abaissement (34) peut être agencé parallèlement à un axe d'abaissement (36) dans au moins une position d'abaissement de la sonde de mesure (10) dans le trou, dans lequel l'axe d'abaissement (36) correspond à un axe de mesure (36) d'un outil de génie civil pour la création du trou (3).

**5.** Dispositif de mesure selon l'une des revendications 1 à 4, **caractérisé en ce**

**que** l'au moins un émetteur de signal de mesure (12) ainsi que l'au moins un récepteur de signal de mesure (14) sont réalisés pour l'émission et la réception de signaux de mesure de manière continue.

**6.** Dispositif de mesure selon l'une des revendications 1 à 5, **caractérisé en ce**

**que** la sonde de mesure (10) et le dispositif de calibrage (20) sont entourés par un cadre de boîtier ouvert au moins partiellement,
**que** le cadre de boîtier présente un axe de symétrie parallèle à l'axe d'abaissement (36) et
**que** le centre de gravité commun de la sonde de mesure (10), du dispositif de calibrage (20) et du cadre de boîtier se trouve l'axe d'abaissement (36).

**7.** Dispositif de mesure selon l'une des revendications 1 à 6, **caractérisé en ce**

**que** l'élément de calibrage (22) présente une surface orientée orthogonalement à l'émetteur de signal de calibrage (16).

8. Dispositif de mesure selon l'une des revendications 1 à 7,
**caractérisé en ce**
**que** pour l'émission du signal de calibrage sur l'élément de calibrage (22), un émetteur de signal de calibrage (16) et/ou pour la réception du signal de calibrage réfléchi sur l'élément de calibrage (22), un récepteur de signal de calibrage séparé (18) sont prévus.

9. Dispositif de mesure selon l'une des revendications 1 à 8,
**caractérisé en ce**
**que** respectivement une pluralité d'émetteurs de signal de mesure (12) et de récepteurs de signal de mesure (14), en particulier respectivement deux, trois ou quatre émetteurs de signal de mesure (12) et récepteurs de signal de mesure (14) sont prévus.

10. Procédé de mesure pour la mesure d'un trou (3) dans le sol, avec un dispositif de mesure selon la revendication 1, pour lequel

- au moins une sonde de mesure (10) avec un dispositif d'abaissement (30) est abaissée dans au moins une position d'abaissement dans le trou (3),
- au moins un émetteur de signal de mesure (12) de la sonde de mesure (10) est présent,
- au moins un récepteur de signal de mesure (14) de la sonde de mesure (10) reçoit un signal de mesure à ultrasons d'une zone de paroi (5) du trou (3) et
- un émetteur de signal de calibrage (16) de la sonde de mesure (10) émet un signal de calibrage à ultrasons sur un élément de calibrage (22),
- un récepteur de signal de calibrage (18) de la sonde de mesure (10) reçoit un signal de calibrage à ultrasons réfléchi sur l'élément de calibrage (22),
- une unité d'évaluation détermine une distance de paroi (7) entre l'émetteur de signal de mesure (12) et la zone de paroi (5) du trou (3),
- dans lequel une distance de mesure est associée au signal de mesure à ultrasons reçu à l'aide d'une prescription d'association et
- dans lequel l'unité d'évaluation modifie et calibre la prescription d'association à l'aide du signal de calibrage à ultrasons reçu et réfléchi par l'élément de calibrage,

**caractérisé en ce**

- **que** l'élément de calibrage (22) est monté rigidement latéralement sur la sonde de mesure (10) avec une distance de calibrage définie, et
- **que** l'émetteur de signal de mesure (12) émet des signaux de mesure à ultrasons latéralement en direction de la zone de paroi du trou.

11. Procédé de mesure selon la revendication 10,
**caractérisé en ce**
**que** le signal de calibrage est envoyé simultanément ou en décalage temporel par rapport au signal de mesure.

12. Procédé de mesure selon l'une des revendications 10 ou 11,
**caractérisé en ce**
**que** la prescription d'association est modifiée et calibrée lors de la détermination d'une pluralité de distances de paroi (7) sur une pluralité de positions d'abaissement dans le trou (3).

13. Procédé de mesure selon l'une des revendications 10 à 12,
**caractérisé en ce**
**que** des signaux de mesure sont émis et reçus lors d'un abaissement et d'une réapparition de la sonde de mesure (10), dans lequel les distances de paroi (7) déterminées lors de la réapparition de la sonde de mesure (10) par l'unité d'évaluation sont utilisées pour la commande des distances de paroi (7) déterminées lors de l'abaissement.

14. Procédé de fabrication d'une paroi dans le sol, en particulier d'une paroi à pieu foré ou paroi à fente qui est formée de plusieurs éléments de paroi contigus les uns aux autres, dans lequel

- pour chaque élément de paroi, un trou est établi,
- le trou est mesuré et
- le trou est rempli d'une masse durcissable pour la formation de l'élément de paroi,

**caractérisé en ce**
**qu'**un procédé de mesure selon l'une des revendications 10 à 13 est utilisé pour la mesure d'au moins un trou.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4161715 A